Europäisches Patentamt

European Patent Office

Office européen des brevets

(19)

(11) Numéro de publication: **0 206 848**
**B1**

(12) **FASCICULE DE BREVET EUROPEEN**

(45) Date de publication du fascicule du brevet:
**25.04.90**

(51) Int. Cl.⁴: **A01C 7/00**, A01C 1/06

(21) Numéro de dépôt: **86400932.9**

(22) Date de dépôt: **28.04.86**

(54) **Procédé et dispositif pour régler la profondeur à laquelle des semences doivent être placées dans le sol par l'intermédiaire d'un semoir, et produits permettant ce réglage.**

(30) Priorité: **30.04.85 FR 8506582**

(43) Date de publication de la demande:
**30.12.86 Bulletin 86/52**

(45) Mention de la délivrance du brevet:
**25.04.90 Bulletin 90/17**

(84) Etats contractants désignés:
**AT BE DE GB IT NL SE**

(56) Documents cités:
**DE-A- 829 240**
**FR-A- 2 078 861**
**GB-A- 2 061 518**
**US-A- 3 460 492**

(73) Titulaire: **INSTITUT NATIONAL DE LA RECHERCHE AGRONOMIQUE (INRA), 149, rue de Grenelle, F-75341 Paris Cedex 07(FR)**

(72) Inventeur: **Bussieres, Ph., Verquières Route de Saint Andiol, F-13670 Saint Andiol(FR)**

(74) Mandataire: **Phélip, Bruno et al, c/o Cabinet Harlé & Phélip 21, rue de La Rochefoucauld, F-75009 Paris(FR)**

ACTORUM AG

## Description

La présente invention est du domaine de l'agriculture. Elle vise plus précisément un procédé pour régler la profondeur à laquelle des semences doivent être placées dans le sol, par l'intermédiaire d'un semoir. L'invention se rapporte également à un dispositif pour la mise en oeuvre de ce procédé, ainsi qu'aux produits permettent de réaliser ce réglage des semis en profondeur.

On sait que la profondeur à laquelle les semences sont placées dans le sol est déterminante pour le développement, le rendement et la conduite de la plupart des cultures mises en place par semences qui, dans leur sens géneral, comprennent à la fois les graines, les tubercules, les bulbes, les boutures et autres.

Aussi, il importe pour l'agriculteur de maîtriser cette profondeur et de connaître, après semis, la profondeur réalisée pour orienter ses actions techniques ultérieures et pouvoir tirer des conclusions sur l'effet de la profondeur dans ses conditions propres de culture. Il existe également un problème similaire important en ce qui concerne le nombre de semences mises en place au cours du semis, c'est-à-dire la "densité" de semis.

Dans les semoirs utilisés et décrits jusqu'à présent dans l'état de la technique antérieure, la profondeur de semis peut être modifiée en jouant sur la position relative des differents éléments constitutifs du semoir, par exemple ceux qui ouvrent dans le sol la raie, trace dans laquelle viennent tomber les semences. Toutefois, ces semoirs décrits dans la littérature technique, ne permettent pas de placer de façon suffisamment précise, les semences aux alentours d'une profondeur donnée ni de connaître, de façon suffisante, après semis, la profondeur à laquelle lesdits semences ont été placées. Ceci tient au fait que la profondeur à laquelle sont placées les semences résulte de multiples interactions difficiles à prévoir entre les éléments constitutifs du semoir, l'état du sol et les caractéristiques des semences elles-mêmes tous ces éléments étant en mouvement les uns par rapport aux autres. le réglage des pièces de profondeur s'effectue alors à l'arrêt, après une succession d'essais et d'observations de la profondeur réalisée. Cependant, étant donné que ces observations, faites en fouillant le sol, sont malaisées, approximatives et limitées, ce réglage initial est souvent inadapté à l'ensemble de la parcelle, comme c'est le cas lorsque les interactions précédentes varient d'un moment à l'autre au cours du semis, par exemple dans un champs constitué de zones différentes du fait de l'état du sol que les passages de semoir traversent.

Le nombre de semences mises en place par les semoirs dépend aussi d'interactions complexes qu'il n'est pas toujours facile de prévoir pour régler convenablement les pièces concernées. Le contrôle de la densité de semences mises en place est également difficile.

Parmi les publications de la technique antérieure, on peut citer les documents US-A-3 460 492 et DE-A-829240 qui font état de l'utilisation de semences pourvues de revêtements métalliques de façon que ces dernières puissent être soumises à l'action d'un aimant afin de permettre la séparation desdites semences et le guidage de leur déplacement. Par ailleurs, dans le document FR-A-2078861, sont décrites des éponges chirurgicales comportant des aimants rapportés de façon à les séparer dans un corps après intervention chirurgicale.

Un des objets de l'invention est d'obvier dans une très large mesure ces difficultés de réglage, en permettant de contrôler de façon permanente la profondeur et la densité des semis, en fournissant un procédé permettant d'effectuer en quasi-permanence des mesures indirectes de la profondeur à laquelle les semences sont placées dans le sol, procédé grâce auquel, en fonction des résultats des mesures, on réalise un ajustement quasi-permanent de la position des éléments constitutifs du semoir, qui jouent sur la profondeur des semences, tout en contrôlant la densité du semis.

Un autre objet de l'invention est de fournir un dispositif fiable permettent le positionnement correct des éléments constitutifs du semoir, et de mettre en évidence la densité de semis.

Encore un autre objet de l'invention, consiste à fournir des produits ou éléments permettant de réaliser in situ les différentes mesures nécessaires au positionnement des éléments constitutifs du semoir.

La présente invention a donc pour objet un procédé pour régler la profondeur à laquelle les semences doivent être placées dans le sol, par l'intermédiaire d'un semoir, selon lequel on sème un certain nombre d'éléments constitués par les semences ou par des semences factices desdites semences, ces éléments étant susceptibles de provoquer des modifications du champ électromagnétique dans le milieu environnant les semis, après leur mise en place dans le sol, ces modifications étant ensuite détectées par des moyens d'exploration pour être mises en forme au moyen d'un dispositif de traitement électro-informatique coopérant avec une unité de contrôle commandant en permanence des moyens moteurs agissant sur le positionnement en profondeur des éléments constitutifs du semoir.

L'invention a également pour objet un dispositif pour la mise en oeuvre de ce procédé, comportant :

- au moins un dispositif d'exploration permettant de capter les modifications du champ électromagnétique dans le milieu environnant les semis, provoquées par la présence des éléments semés ;
- des moyens de traitement de l'information fournis par le dispositif d'exploration, constitués par des moyens de traitement numérique et de transmission des données à une unité de traitement en ligne qui coopère avec une unité de contrôle ;
- des moyens moteurs pour le positionnement des éléments constitutifs du semoir, ces moyens moteurs étant actionnés par une unité de commande moteur pilotée par l'unité de traitement en ligne à partir de l'unité de contrôle.

Selon une forme de réalisation préférée du dispositif de l'invention, l'unité de traitement en ligne est constituée par un microprocesseur tandis que l'unité de contrôle est constituée par un micro-ordinateur, l'unité de traitement en ligne étant reliée à l'unité de contrôle par un bus.

Selon une variante de réalisation, l'unité de traitement en ligne est constituée par un microordinateur et un microprocesseur, tandis que l'unité de contrôle est constituée par une interface de sortie binaire, l'unité de traitement en ligne étant reliée à l'unité de contrôle par un bus.

Les moyens moteurs sont avantageusement constitués par un moteur électrique, par exemple un moteur pas à pas ou bien un système hydraulique, par exemple incorporant un ou plusieurs vérins. Chaque dispositif d'exploration sera avantageusement constitué par une sonde coopérant avec au moins un détecteur de champs magnétiques, par exemple ceux utilisés pour détecter des constituants métalliques.

La présente invention a également pour objet les éléments modificateurs du champ électromagnétique dans le milieu environnant les semis.

Selon une première forme de réalisation, ces corps sont constitués par des semences normales sur lesquelles on a rapporté une zone métallique dont l'aire de la surface de projection est indépendante du plan de projection.

Selon une seconde forme de réalisation, ces corps sont constitués de semences factices, c'est-à-dire que leurs caractéristiques physiques, en particulier à taille, le poids, la forme et l'état de surface, qui déterminent leur comportement vis-à-vis du semoir et du sol, sont identiques à celles des semences normales de la culture à semer, ces corps comportant également une zone métallique dont l'aire de la surface de projection est indépendante du plan de projection. On notera que ces corps particuliers peuvent comporter des matériaux agressifs et/ou fertilisants.

Selon une technique de fabrication particulière, la partie métallique de ces corps ou semences métallisées est rapportée par métallisation sous vide par projection (shoopage), par choc sur feuille en turbine, par électrolyse ou par tout precédé permettant de conférer à ce corps un caractère métallique certain.

D'autres caractéristiques et avantages de la présente invention apparaîtront à la lecture de la description suivante, d'une forme de réalisation non limitative de dispositifs permettant la mise en oeuvre du procédé de l'invention, en référence aux dessins annexés dans lesquels:

- Fig. 1A à 1D représentent quelques unes des différentes formes de réalisation d'éléments permettant la mise en oeuvre du procédé selon la présente invention;
- Fig. 2 est un schéma synoptique des différentes unités constitutives d'un dispositif pour la mise en oeuvre du procédé selon l'invention;
- Fig. 3 est une vue d'une forme particulière de dispositif pour la mise en oeuvre du procédé de l'invention;
- Fig. 4A, Fig. 4B présentent les éléments constitutifs d'un semoir destinés à être incorporés dans le dispositif permettant la mise en oeuvre du procédé de l'invention;

- Fig. 5 est un système électro-informatique destiné à être incorporé dans la forme de réalisation de la Fig. 3;
- Fig. 6 est une vue schématique de la commande du moteur de positionnement du semoir.

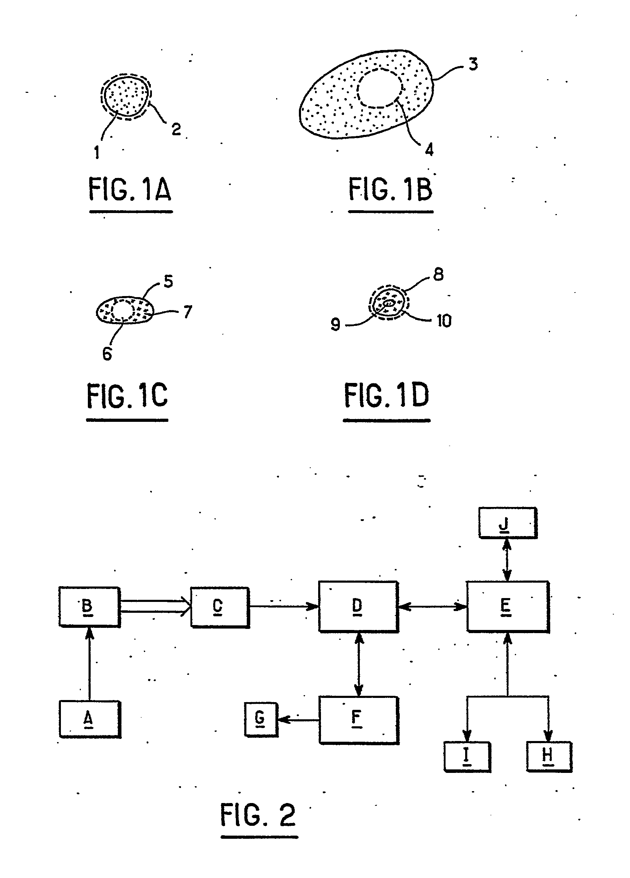

Dans le semoir, selon le procédé de l'invention, sont placées, éventuellement en mélange avec des semences normales de la culture, des semences particulières qui induisent des variations du champ électro-magnétique environnant le semis, au voisinage du dispositif d'exploration. Lorsque ces moyens d'exploration sont sensibles au champ électro-magnétique, les semences particulières sont, soit des semences normales de la culture à semer modifiées par rapport d'une ou de plusieurs zones métalliques, soit des semences factices de la culture à semer, comportant une ou plusieurs zones métalliques. Lorsqu'elles sont en mélange avec des semences normales de la culture, les semences métallisées ont des caractéristiques (en particulier leur poids, leur taille, leur forme et leur état de surface) qui imitent les caractéristiques des semences normales qui déterminent leur positionnement dans le sol. Il est judicieux que les semences métallisés offrent une aire constante au droit du dispositif d'exploration, de façon que la perturbation qu'elles induisent dans le champ électro-magnétique soit fonction seulement de leur distance du dispositif. Comme les semences métallisées sont orientées vers le sol après y avoir été placées par le semoir, de façon aléatoire, il est préférable que l'aire de projection de leur surface métallique soit identique, quel que soit le plan de projection, ce qui correspond en particulier à une surface sphérique, ou sensiblement sphérique comme représenté sur les Fig. 1A à 1D.

Certaines cultures ont des semences qui présentent naturellement une forme externe, sensiblement sphérique, par exemple le pois, le colza, le sorgho, la pomme de terre, les semences enrobées, les semences prégermées pour certaines variétés au moins, et analogues, tandis que d'autres s'en éloignent sensiblement. Pour les cultures dont les semences sont approximativement sphériques et de taille suffisante et peu variable, on utilise dans le procédé de l'invention des semences telles que représentées sur la Fig. 1A dans laquelle une graine sphérique 1 est recouverte d'une pellicule métallisée 2.

Pour des cultures dont les semences normales sont de taille suffisante (comme c'est le cas de tubercules de pomme de terre) et surtout si elles ont une forme assez différente d'une sphère ou qu'elles sont de taille variable, les semences particulières métallisées, comme représentées sur la Fig. 1B, peuvent être des semences normales 3 garnies à l'intérieur d'une sphère métallique 4.

Pour des semences qui sont de taille insuffisante pour être ainsi garnies, les semences particulières de l'invention sont des semences factices de celles de la culture à semer. Comme représenté sur la Fig. 1C, ces semences 5 sont constituées d'une sphère métallique 6, de taille inférieure à la plus petite dimension externe des semences normales et, comportent extérieurement un enrobage 7 les ajustant à la forme et à la taille des semences normales.

Dans la forme de réalisation de la Fig. 1D, les semences particulières peuvent être également constituées par des semences normales 9 entourées d'un enrobage 10 puis recouvertes d'une sphère métallique 8. On peut également envisager d'incorporer la sphère métallique dans la semance particulière.

Dans les champs fréquemment semés, en mettant en oeuvre le procédé selon la présente invention, il est préférable que les semences particulières métallisées, une fois enfouies, perdent leur capacité d'agir sur le dispositif lors de semis ultérieurs, ce qui a lieu quand la sphère métallique est dégradée. Comme cette dégradation est d'autant plus rapide que l'épaisseur de la sphère est faible, il est préférable qu'elle soit réduite à celle d'une pellicule. Comme elle est aussi favorisée par l'agressivité du milieu, qui est fonction de ces constituants chimiques, il est préférable que les semences particulières comportent, à l'intérieur et/ou à l'extérieur de la sphère métallique un matériau agressif qui constitue tout ou partie de l'enrobage. Etant donné que l'agressivité de ce matériau éventuellement disposé à l'intérieur de la sphère métallique, s'il n'y est placé à l'état liquide, est liée à l'entrée d'eau dans la sphère métallique, celle-ci doit permettre à l'eau d'y pénétrer. Pour ce faire, la sphère métallique peut comporter des orifices, tels que des trous traversant, permettant une circulation des liquides. On peut également envisager, en utilisant les techniques bien connues de dragéification, de prévoir un certain nombre de zones séparées les unes des autres par des interstices de façon à permettre la pénétration des liquides à l'intérieur des semences.

On a représenté schématiquement sur la Fig. 2 un système électro-informatique permettant la mise en oeuvre du procédé de l'invention. Ce système comporte des moyens d'exploration A qui transmettent le signal correspondant à la variation des caractéristiques physiques de l'environnement, par exemple la variation du champ électro-magnétique due à la présence dans les semis des semences telles que représentées sur les Fig. 1A à 1D, à une unité de digitalisation B où le signal ainsi obtenu est digitalisé, par exemple, sous 8 bits, et transmis par l'unité de transmission C sous un bit à l'unité de traitement en ligne D qui, coopère avec une unité de contrôle E et d'autre part, à une unité de commande F d'un moteur G destiné au positionnement des éléments du semoir. Cette unité de contrôle E coopère avec l'unité de traitement logique J et est reliée par ailleurs à une unité de mémorisation I et à des moyens de visualisation et de commande par clavier H. Les moyens d'exploration A peuvent comporter une ou plusieurs sondes associées respectivement à un ou plusieurs dispositifs détecteurs.

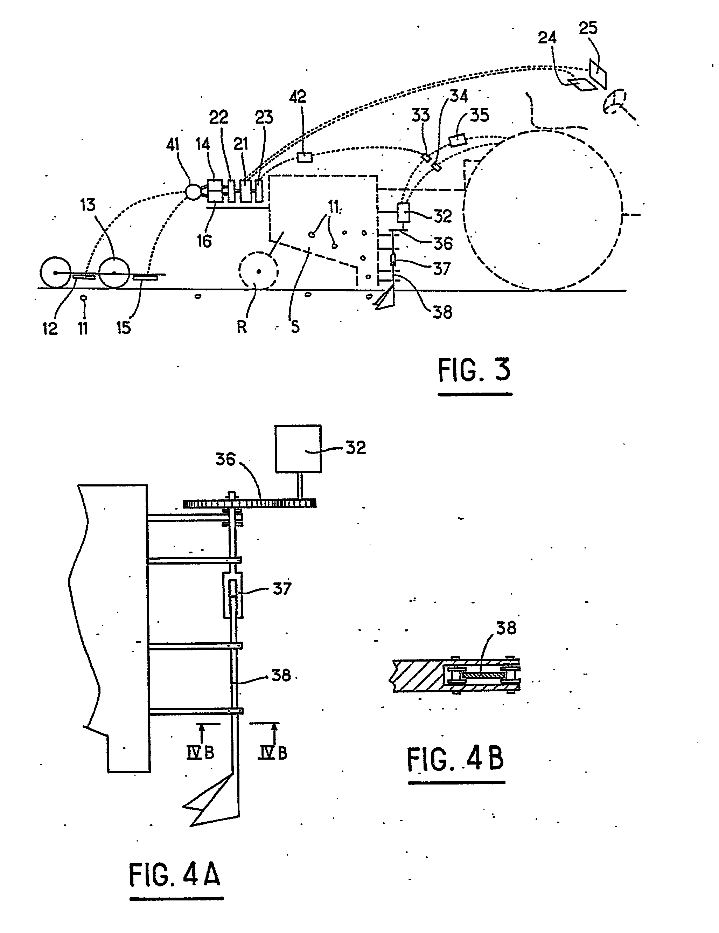

Dans la forme de réalisation représentée sur la Fig. 3, on dispose dans une extrémité de semoir S, un lot de semences factices 11, on mélange avec les semences à semer, chacune des semences factices étant constituée d'une perle de sulfate d'ammoniaque métallisé sous vide par du fer doux et enrobée d'une couche d'argile la mettant à une forme et à une taille identiques aux semences normales. Les différentes zones constitutives de chaque semence factice sont déterminées pour conférer à l'ensemble des caractéristiques de poids, de forme et de taille jouant sur le positionnement des semences dans le sol, un état équivalent à celui des semences à semer. Le mélange des semences 11 métallisées aux semences normales se fait dans un rapport donnant une faible probabilité d'obtenir dans le sol sous la sonde du détecteur 12 deux semences métallisées en même temps. Ce rapport est par exemple de 1 à 20 pour le maïs. Le dispositif mis en oeuvre comporte donc 2 détecteurs de métaux puissants sur une largeur de 10 à 20 cm et positionnés au-dessus de la ligne de semis, au moyen d'un support roulant 13, semi-porté par la moitié du semoir, sans partie métallique, par exemple, en matière plastique ou rigide, permettant de conserver une distance constante faible, de quelques centimètres, entre le sol et la sonde 12.

Cette sonde 12 est associéee au détecteur de métaux 14, dont la réponse électrique est mesurée par la variation de tension aux bornes du haut-parleur. On a également prévu une seconde sonde de détecteur de métaux 15 servant à repérer les variations de position de la sonde 12 et les variations du milieu environnant, qui ne sont pas dues aux éléments métallisés, et agissant sur une largeur de 10 à 20 cm, et positionnée aussi au-dessus de la ligne de semis, sur le support 13, entre le semoir et la sonde 12 dont elle est solidaire dans ses déplacements verticaux. Cette seconde sonde coopère avec un second détecteur à métaux 16 réglé pour être insensible au fer doux des semences métallisées 11. Ce dispositif comporte un système électronique 21 présentant deux entrées pour recevoir respectivement des signaux issus des détecteurs 14 et 16. L'entrée des signaux issus des bornes du haut-parleur de 14 et de 16 se fait après passage par une interface 22 les conditionnant et les convertissant en signaux digitaux à l'entrée du système 21. Le système 21 contient un programme informatique pour décompter les valeurs maximales des signaux émis du détecteur 14, les transformer en unité de profondeur, corriger celles-ci des signaux issus du détecteur 16, eux-mêmes transformés en unité de distance, puis en faire la moyenne toutes les N valeurs, N étant par exemple égal à 10, et comparer celle-ci à la valeur choisie par l'utilisateur, de la profondeur de semis à maintenir. Selon l'ecart obtenu, l'appareil donne en sortie un signal digital qui fixe l'état de l'interface 23 qui détermine la commande du moteur. On a également prévu de monter sur le bâti du semoir, un clavier numérique 24 et un indicateur 25 placé au poste de conduite du tracteur de façon à afficher sous forme digitale, le nombre de signaux comptés et la valeur moyenne obtenue de la profondeur de semis sur les N derniers signaux. Avant utilisation, le système électro-informatique 21 est paramétré par étalonnage avec l'appareil 12 et des semences métallisées disposées à des profondeurs connues et par un étalonnage avec l'appareil 15, placé à différentes hauteurs au-dessus du sol.

Le dispositif pour la mise en oeuvre du procédé selon l'invention, comporte également un moteur électrique 32 qui est inséré dans le circuit électrique du véhicule tracteur quand le relais 33 est mis en action par l'interface 23. Lorsque le relais 34 est mis en action par l'interface 23, le moteur électrique 32 est inséré dans l'autre sens, ce qui inverse son sens de rotation. On a également prévu un temporisateur 35 inséré dans le circuit d'alimentation du moteur 32, qui est destiné à fixer la durée de fonctionnement du moteur après son démarrage pour provoquer une variation élémentaire de la profondeur de semis. Comme plus particulièrement représenté sur les Fig. 4A et 4B, un jeu de pignons 36 transmet le mouvement moteur à une pièce intermédiaire filetée 37 se vissant dans la pièce de profondeur de semis 38 qui se déplace verticalement. D'autres variantes de commande moteur, selon le type de semoir utilisé, peuvent être également envisagées: par exemple le système moteur de type hydraulique avec des vannes électriques, et la pièce intermédiaire 37 peut agir aussi les pièces de profondeur que sont les roues de terrage ou les patins de terrage R.

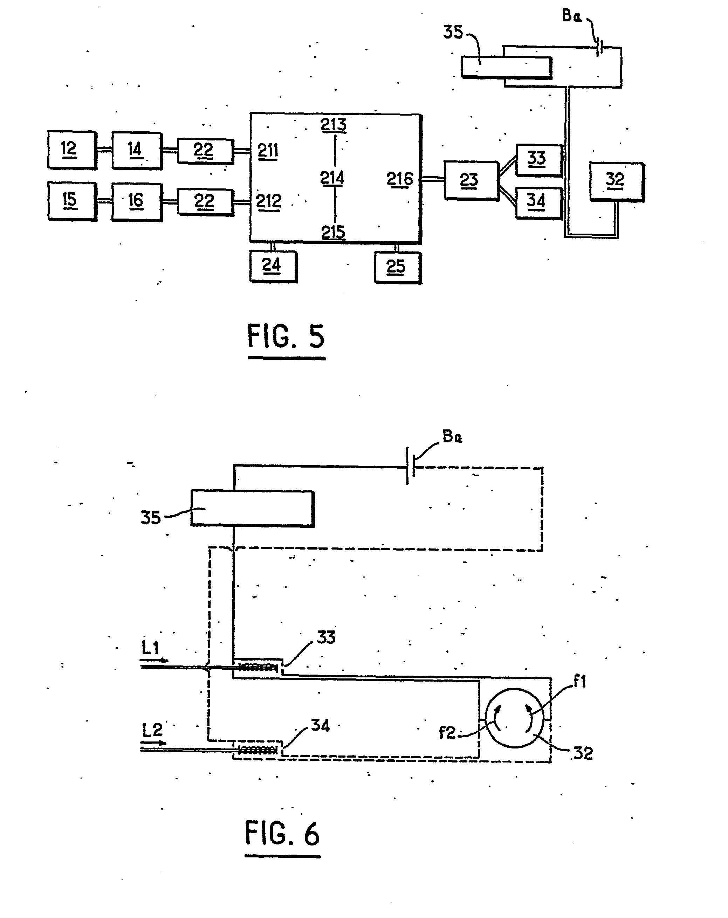

Dans la forme de réalisation représentée à la Fig. 5, le système électro-informatique 21 est constitué d'un microprocesseur 213 associé, d'une part, à une mémoire morte programme PROM 214 et à une mémoire vive RAM 215. Il comporte deux entrées pour recevoir les signaux issus des détecteurs 14 et 16. L'entrée des signaux issus des bornes du haut-parleur de 14 et de 16 se fait après passage par une interface 22 les convertissant en signaux digitaux à l'entrée du système électro-informatique 21. A la sortie du système 21 est prévue une interface 23 qui permet ou non le passage des signaux L1 et L2 destinés respectivement aux relais 33 et 34 commandant le sens de rotation du moteur 32 actionné par batterie Ba selon les flèches f1 ou f2.

Le dispositif permettant de mettre en oeuvre le procédé de l'invention comporte également, comme représenté sur la Fig. 3, un distributeur 41 permettant de relier une des sondes 12 au détecteur 14, ainsi qu'un ensemble d'interrupteurs 42 entre, d'une part le système électro-informatique 21 ou l'interface 23 et d'autre part, les relais 33 et 34.

Il est à noter que la métallisation des semences particulières peut être réalisée par différentes méthodes bien connues de l'homme de métier, par exemple la métallisation sous vide, par projection ou bien par choc sur feuille métallique en turbine.

## Revendications

1. Procédé pour régler la profondeur à laquelle les semences doivent être placées dans le sol par l'intermédiaire d'un semoir, selon lequel on sème un certain nombre d'éléments comportant une zone métallique et constitués par les semences à semer ou par des semences factices des dites semences, ces éléments étant susceptibles de provoquer par la présence de la zone métallique des modifications du champ électromagnétique dans le milieu environnant les semis, après leur mise en place dans le sol, ces modifications étant ensuite détectées par des moyens d'exploration (12, 15; A), caractérisé en ce que lesdites modifications du champ électro-magnétique sont mises en forme au moyen d'un dispositif de traitement électroinformatique (21, 22, 23; B, C, D) coopérant avec une unité de contrôle (214, 215, 216, 23; D, E, F) actionnant en permanence des moyens moteurs (32; G) agissant sur le déplacement et le positionnement en profondeur des éléments de positionnement (36, 37, 38) du semoir (S).

2. Dispositif pour la mise en oeuvre du procédé selon la revendication 1 comportant:
- au moins un dispositif d'exploration (A) permettant de capter les modifications du champ électromagnétique dans le milieu environnant les semis, modifications provoquées par la présence des éléments, caractérisé en ce que sont en outre prévus:
- des moyens de traitement de l'information fournis par des moyens d'exploration (A) constitués par des moyens de traitement numérique (B) et de transmission (C) des données à une unité de traitement en ligne (D) qui coopère avec l'unité de contrôle (E); et
- des moyens moteurs (G) pour le déplacement et le positionnement en hauteur des éléments constitutifs (36, 37, 38) du semoir (S), ces moyens moteurs étant commandés par l'unité de commande moteur (F) elle-même pilotée par l'unité de traitement en ligne (D) à partir de l'unité de contrôle (E).

3. Dispositif selon la revendication 2, caractérisé en ce que l'unité de traitement en ligne (D) est constituée par un microprocesseur.

4. Dispositif selon la revendication 2, caractérisé en ce que l'unité de contrôle (E) est constituée par un micro-ordinateur.

5. Dispositif selon l'une quelconque des revendications 2 à 4, caractérisé en ce que l'unité de traitement en ligne (D) est reliée à l'unité de contrôle (E) par un bus.

6. Dispositif selon la revendication 2, caractérisé en ce que les moyens moteurs sont constitués par un moteur électrique (32).

7. Dispositif selon la revendication 2, caractérisé en ce que les moyens moteurs sont constitués par au moins un vérin hydraulique.

8. Dispositif selon la revendication 2, caractérisé en ce que chaque dispositif d'exploration est constitué par une sonde (12, 15) coopérant avec un ou plusieurs détecteurs (14, 16).

9. Dispositif selon l'une quelconque des revendications 1 à 8, caractérisé en ce que l'unité de traitement en ligne est constituée par un microordinateur et son microprocesseur, tandis que l'unité de contrôle est constituée par une interface de sortie binaire, l'unité de traitement en ligne étant reliée à l'unité de contrôle par un bus.

10. Procédé selon la revendication 1, caractérisé par l'utilisation d'éléments constitués par les semences à semer, destinés à modifier les caractéristiques électromagnétiques du milieu environnant les semis, lesdits éléments étant constitués par des corps présentant au moins une zone de métallisation susceptible de provoquer des perturbations du champ magnétique dans la zone des semis après leur mise en place dans le sol, la zone métallisée (4) se trouvant à l'intérieur du corps proprement dit (3).

11. Procédé selon la revendication 1, caractérisé par l'utilisation d'éléments constitués par les semences à semer, destinés à modifier les caractéristiques électromagnétiques du milieu environnant les semis, lesdits éléments étant constitués par des corps présentant au moins une zone de métallisation susceptible de provoquer des perturbations du champ magnétique dans la zone des semis après leur mise en place dans le sol, le corps proprement dit étant constitué par un matériau éventuellement composé en tout ou en partie par un matériau actif et/ou fertilisant.

12. Procédé selon la revendication 1, caractérisé par l'utilisation d'éléments constitués par des semences factices des semences à semer, destinés à modifier les caractéristiques électromagnétiques du milieu environnant les semis lesdits éléments étant constitués par des corps présentant au moins une zone de métallisation susceptible de provoquer des perturbations du champ magnétique dans la zone des semis après leur mise en place dans le sol.

13. Procédé selon la revendication 12, caractérisé en ce que la zone métallisée des éléments est située à l'extérieur du corps proprement dit.

14. Procédé selon la revendication 12, caractérisé en ce que la zone métallisée (6) se trouve à l'intérieur du corps proprement dit (5).

15. Procédé selon la revendication 12, caractérisé en ce que le corps proprement dit est constitué par un matériau éventuellement composé en tout ou en partie par un matériau actif et/ou fertilisant.

## Claims

1. Method for regulating the sowing depth of seeds in the ground by a seed drill, according to which a certain number of elements comprising a metallic zone and consisting of the seeds to be sown or of dummy seeds imitating the said seeds are sown, these elements being capable, as a result of the presence of the metallic zone, of causing changes of the electromagnetic field in the environment surrounding the seed beds, after they have been placed in the ground, these changes subsequently being detected by scanning means (12, 15; A), characterized in that the said changes of the electromagnetic field are converted by means of an electrical information-processing device (21, 22, 23; B, C, D) interacting with a control unit (214, 215, 216, 23; D, E, F) permanently actuating motor means (32; G) which act on the displacement and depth positioning of the positioning elements (36, 37, 38) of the seed drill (S).

2. Apparatus for carrying out the method according to Claim 1, comprising:
   – at least one scanning device (A) making it possible to sense the changes of the electromagnetic field in the environment surrounding the seed beds, these changes being caused as a result of the presence of the elements, characterized in that there are also provided:
   – means for processing the information supplied by the scanning means (A), consisting of means for numerical processing (B) of the data and for the transmission (C) of these to a line processing unit (D) which interacts with the control unit (E); and

   – motor means (G) for the displacement and depth positioning of the component elements (36, 37, 38) of the seed drill (S), these motor means being controlled by the motor control unit (F), itself commanded by the line processing unit (D) from the control unit (E).

3. Apparatus according to Claim 2, characterized in that the line processing unit (D) consists of a microprocessor.

4. Apparatus according to Claim 2, characterized in that the control unit (E) consists of a microcomputer.

5. Apparatus according to any one of Claims 2 to 4, characterized in that the line processing unit (D) is connected to the control unit (E) by means of a bus.

6. Apparatus according to Claim 2, characterized in that the motor means consist of an electric motor (32).

7. Apparatus according to Claim 2, characterized in that the motor means consist of at least one hydraulic jack.

8. Apparatus according to Claim 2, characterized in that each scanning device consists of a probe (12, 15) interacting with one or more detectors (14, 16).

9. Apparatus according to any one of Claims 1 to 8, characterized in that the line processing unit consists of a microcomputer and its microprocessor, whilst the control unit consists of a binary output interface, the line processing unit being connected to the control unit by means of a bus.

10. Method according to Claim 1, characterized by the use of elements consisting of the seeds to be sown, which are intended to change the electromagnetic characteristics of the environment surrounding the seed beds, the said elements consisting of bodies having at least one metallized zone capable of causing disturbances of the magnetic field in the region of the seed beds, after they have been placed in the ground, the metallized zone (4) being located on the inside of the actual body (3).

11. Method according to Claim 1, characterized by the use of elements consisting of the seeds to be sown, which are intended to change the electromagnetic characteristics of the environment surrounding the seed beds, the said elements consisting of bodies having at least one metallized zone capable of causing disturbances of the magnetic field in the region of the seed beds, after they have been placed in the ground, the actual body consisting of a material, if appropriate composed completely or partially of an active and/or fertilizing material.

12. Method according to Claim 1, characterized by the use of elements consisting of dummy seeds imitating the seeds to be sown, which are intended to change the electromagnetic characteristics of the environment surrounding the seed beds, the said elements consisting of bodies having at least one metallized zone capable of causing disturbances of the magnetic field in the region of the seed beds, after they have been placed in the ground.

13. Method according to Claim 12, characterized in that the metallized zone of the elements in located on the outside of the actual body.

14. Method according to Claim 12, characterized in that the metallized zone (6) is located on the inside of the actual body (5).

15. Method according to Claim 12, characterized in that the actual body consists of a material, if appropriate composed completely or partially of an active and/or fertilizing material.


## Patentansprüche

1. Verfahren zur Regelung der Tiefe, in welcher die Samen mittels einer Sämaschine in die Erde eingebracht werden sollen, wobei eine gewisse Anzahl von Elementen gesät wird, die eine metallische Zone aufweisen und aus den auszusäenden Samen oder diesen Samen nachgebildeten Samen bestehen und diese Elemente infolge ihres metallischen Bereichs Veränderungen des elektromagnetischen Feldes in der Umgebung des Saatbettes hervorrufen, nachdem sie in die Erde eingebracht sind, worauf diese Veränderungen durch eine Abtasteinrichtung (12, 15, A) angezeigt werden, dadurch gekennzeichnet, daß die Veränderungen des elektromagnetischen Feldes mittels einer Einrichtung zur elektroinformatischen Behandlung (21, 22, 23; B, C, D) dargestellt werden, die mit einer Steuereinheit (214, 215, 216, 23; D, E, F) zusammenwirkt, welche dauernd auf die Antriebselemente (32, G) einwirkt, die die Veränderung und die Tiefenpositionierung der Positionierungselemente (36, 37, 38) der Sämaschine (S) beeinflussen.

2. Vorrichtung zur Durchführung des Verfahrens nach Anspruch 1, mit mindestens einer Abtasteinrichtung (A) zur Aufnahme der durch die Anwesenheit der Elemente hervorgerufenen Veränderungen des elektromagnetischen Feldes in der Umgebung des Saatbettes, gekennzeichnet durch eine Einrichtung zur Verarbeitung der durch die Abtasteinrichtung (A) gelieferten Information mit Einrichtungen zur numerischen Berechnung (B) und Übertragung (C) der Werte auf eine mit der Steuereinheit (E) zusammenwirkende Einrichtung zur direkten Verarbeitung (D) und Antriebselemente (G) zur Veränderung der Tiefenpositionierung der Hauptteile (36, 37, 38) der Sämaschine (S) durch Einwirkung einer Motorsteuereinheit (F), wobei diese Antriebselemente (G) durch die Motorsteuereinheit (F) gesteuert ist, die ihrerseits von der Einrichtung zur direkten Verarbeitung (D), ausgehend von der Steuereinheit (E) gesteuert wird.

3. Vorrichtung nach Anspruch 2, dadurch gekennzeichnet, daß die Einheit zur direkten Datenverarbeitung (D) aus einem Mikroprozessor besteht.

4. Vorrichtung nach Anspruch 2, dadurch gekennzeichnet, daß die Steuereinheit (E) aus einem Mikrorechner besteht.

5. Vorrichtung nach einem der Ansprüche 2 bis 4, dadurch gekennzeichnet, daß die Einheit zur direkten Datenverarbeitung (D) über eine Anschlußleitung mit der Steuereinheit (E) geschaltet ist.

6. Vorrichtung nach Anspruch 2, dadurch gekennzeichnet, daß die Antriebselemente aus einem Elektromotor (32) bestehen.

7. Vorrichtung nach Anspruch 2, dadurch gekennzeichnet, daß die Antriebselemente aus mindestens einem hydraulischen Stellmotor bestehen.

8. Vorrichtung nach Anspruch 2, dadurch gekennzeichnet, daß jede Abtasteinrichtung aus einer Sonde (12, 15) besteht, die mit einem oder mehreren Fühlern (14, 16) zusammenwirkt.

9. Vorrichtung nach einem der Ansprüche 1 bis 8, dadurch gekennzeichnet, daß die Einheit zur direkten Verarbeitung aus einem Mikrorechner und seinen Mikroprozessor besteht, während die Steuereinheit aus einer Schnittstelle mit binärem Ausgang besteht, wobei die Einheit zur direkten Verarbeitung über eine Anschlußleitung mit der Steuereinheit verbunden ist.

10. Verfahren nach Anspruch 1, gekennzeichnet durch die Verwendung von aus den auszusäenden Samen bestehenden Elementen zur Veränderung der elektromagnetischen Charakteristik der Umgebung der Samen, wobei diese Elemente aus Körpern bestehen, die wenigstens eine metallisierte Zone zur Erzeugung von Störungen des Magnetfeldes im Bereich der Samen nach deren Ablage in der Erde aufweisen und diese metallisierte Zone (4) im Inneren des Körpers (3) angeordnet ist.

11. Verfahren nach Anspruch 1, gekennzeichnet durch die Verwendung von aus den auszusäenden Samen bestehenden Elementen zur Veränderung der elektromagnetischen Charakteristik der Umgebung der Samen, wobei diese Elemente aus Körpern bestehen, die wenigstens einen metallisierten Bereich zur Erzeugung von Störungen des Magnetfeldes in dem Bereich der Samen nach deren Ablage in der Erde aufweisen und die Körper ganz oder teilweise aus einem aktiven und/oder fruchtbarkeitswirksamen Material bestehen.

12. Verfahren nach Anspruch 1, gekennzeichnet durch die Verwendung von Elementen aus den auszusäenden Samen nachgebildeten Samen zur Veränderung der elektromagnetischen Charakteristik der Umgebung der Samen, wobei diese Elemente aus Körpern bestehen, die mindestens eine metallisierte Zone zur Erzeugung von Störungen des magnetischen Feldes im Bereich der Samen nach deren Ablage in der Erde aufweisen.

13. Verfahren nach Anspruch 12, dadurch gekennzeichnet, daß die metallisierte Zone der Elemente an der Außenseite der Körper angeordnet ist.

14. Verfahren nach Anspruch 12, dadurch gekennzeichnet, daß die metallisierte Zone (6) im Inneren der Körper (5) angeordnet ist.

15. Verfahren nach Anspruch 12, dadurch gekennzeichnet, daß der Körper ganz oder teilweise aus einem aktiven und/oder fruchtbarkeitswirksamen Material besteht.

FIG.1A

FIG.1B

FIG.1C

FIG.1D

FIG. 2

FIG. 3

FIG. 4 A

FIG. 4 B

FIG. 5

FIG. 6